# EUROPÄISCHE PATENTSCHRIFT

(11) **EP 3 365 576 B1**
(45) Veröffentlichungstag und Bekanntmachung des Hinweises auf die Patenterteilung: **05.01.2022**
(21) Anmeldenummer: 16797755.2
(22) Anmeldetag: 19.10.2016
(51) Int. Cl.: F16D 69/02, C03C 25/42, D01F 11/04, C23C 14/22, C23C 18/12, B22D 11/00, C03C 14/00, D01F 9/08, D06M 11/53, D06M 101/36

(54) **FASER FÜR TRIBOLOGISCHE ANWENDUNGEN**
FIBER FOR TRIBOLOGICAL APPLICATIONS
FIBRE POUR APPLICATIONS TRIBOLOGIQUES

(30) Priorität: 20.10.2015 AT 6822015
(43) Veröffentlichungstag der Anmeldung: 29.08.2018
(73) Patentinhaber: Tribotecc GmbH, 9601 Arnoldstein (AT)
(72) Erfinder: KIENLEITNER, Herbert, 9601 Arnoldstein (AT); MOSER, Carmen, 9500 Villach (AT); BARTLMAE, Juergen, 9611 Noetsch im Gailtal (AT); SEGRETO, Lorraine, 9500 Villach (AT); SCHRITTESSER, Rudolf, 9500 Villach (AT); FAULLANT, Peter, 9570 Ossiach (AT); SCHMIED, Christian, 9300 St. Veit/Glan (AT)
(74) Vertreter: Ellmeyer, Wolfgang
(86) Internationale Anmeldenummer: PCT/EP2016/075122
(87) Internationale Veröffentlichungsnummer: WO 2017/068002

(56) Entgegenhaltungen:
- WO-A1-95/02564
- JP-A- 2001 302 286
- JP-A- 2013 158 473
- US-A- 3 372 051
- US-A- 4 267 476

## Beschreibung

Die Erfindung betrifft eine Faser für tribologische Anwendungen. Unter einer Faser wird dabei ganz allgemein ein im Verhältnis zu seiner Länge dünnes Gebilde verstanden.

Fasern, wie Metall-, Keramik-, Natur-, Polymerfasern od. dgl. bilden in vielen Bauteilen, wie z.B. in Reibbelägen einen sehr wichtigen funktionellen Bestandteil. Durch die Faserstruktur leisten sie einen wesentlichen Beitrag zur mechanischen und strukturellen Festigkeit und durch ihre thermische Leitfähigkeit werden sogenannte "hot spots" vermieden. Fasern werden generell in synthetische Fasern, natürliche Fasern sowie recyclierte Fasern aus natürlichen und/oder synthetischen Produkten unterteilt.

Tribologische Kontakte zwischen Reibbelag und Bremsscheibe bilden sich hauptsächlich an den Grenzflächen der verwendeten Metallfasern. Die Kontakt-Plateau Theorie besagt, dass sich an der Oberfläche von Bremsbelägen Kontaktplateaus bilden, die sich über den Rest der Belagsoberfläche erheben. Der reale Kontakt des Reibpaares findet innerhalb dieser Kontaktplateaus statt, weshalb Größe und Zusammensetzung dieser Plateaus entscheidenden Einfluss auf das Reibverhalten eines Belages haben. Man unterscheidet hierbei primäre Kontaktplateaus, die von verschleißstabilen, härteren Bestandteilen, z.B. Fasern oder Abrasivpartikeln, gebildet werden und sekundäre Plateaus, die aus verdichteten Verschleißpartikeln bestehen, die sich vor den primären Plateaus anlagern und dort kompaktiert werden.

US 4 267 476 A beschreibt die Beschichtung einer Metallfaser, z.B. Kupferdraht, mit einer Metallmatrix, in die ein Festschmierstoff eingebettet ist.

Die Verwendung von Festschmierstoffen, wie z.B. Graphit und/oder Metallsulfiden ist in vielen Anwendungen Stand der Technik. Festschmierstoffe im Allgemeinen, Metallsulfide im Besonderen werden zur Verbesserung der tribologischen Eigenschaften u.a. in den Anwendungen Reibbelag, Tribokunststoff, flüssiger und pastöser Schmierstoff, Gleitlacke, Abrasivkörper und Sinterformteile, verwendet. Metallsulfide bewirken eine Verringerung des Verschleißes der Reibpartner, können Reibwerte stabilisieren und modifizieren und werden als Komfort-Additive gegen unerwünschte Erscheinungen eingesetzt. Unerwünschte Erscheinungen umfassen unter anderen Rupfen, Rubbeln, Stick-Slip-Phänomene, sowie hoch- und niederfrequente Schwingungen des Tribosystems.

Die Erfinder haben herausgefunden, dass z.B. bei Bremsbelägen im Betrieb die beigemischten Festschmierstoffe von den Kontaktplateaus wegwandern und bereits nach kurzer Betriebszeit für den eigentlichen Kontakt der Reibpartner nur in einem geringem Ausmaß zur Verfügung stehen und somit für tribologische Zwecke nur vermindert wirken können.

Aufgabe der Erfindung ist es, eine Faser anzugeben, die es ermöglicht, die tribologischen Eigenschaften von Bauteilen deutlich zu verbessern.

Erfindungsgemäß wird dies dadurch erreicht, dass eine Faser für tribologische Anwendungen bereitgestellt wird, welche zumindest einen Festschmierstoff umfasst oder mit zumindest einem Festschmierstoff oberflächenbehandelt ist, wobei die Faser eine Metallfaser, Keramikfaser, Naturfaser, Polymerfaser, Zellulosefaser, Aramidfaser, Kunststofffaser, Glasfaser, Nanofaser oder Kohlenstofffaser ist,und wobei der Festschmierstoff ausgewählt ist aus der Gruppe bestehend aus SnS, SnS2, Bi2S3, ZnS, WS2, CuFeS2, CuS, Cu2S, MnS, Sb2S3, TiS2, Sulfiden von Cr/Co/Ni, Sn2S3, MoS3, WS3, Fel-xS, MnS2, Sb2S5, ZrS2, CaS, MgS, Sulfiden von La, Ce, mehrphasigen Metallsulfiden aus verschiedenen Metallen, BN, PTFE, Phosphaten, Oxiden, oder Mischungen davon, dadurch gekennzeichnet, dass die Faser sulfidiert ist.

Unterschiedliche Methoden der Sulfidierung entsprechen dem Stand der Technik.

Der Festschmierstoff kann dabei erst an der Oberfläche der Faser entstehen, an der Oberfläche der Faser angeordnet werden oder umfasst die Faser ganz oder teilweise.

Durch die erfindungsgemäße Ausbildung von sulfidierten Fasern, die oberflächlich oder vollständig aus Festschmierstoffen bestehen oder mit diesen beschichtet sind, können Festschmierstoffe direkt und gezielt in die Nähe von tribologischen Kontaktplateaus gebracht werden, die sich in und um die primären Kontaktplateaus, gebildet von strukturgebenden Fasern, befinden, und im Bereich dieser tribologischen Kontaktplateaus gehalten werden, da die fasrigen Festschmierstoffe im Faserverbund nicht, oder nur erschwert wegwandern können.

In der US 2015/0204403 A1 ist eine graphitbeschichtete Faser beschrieben, welche zur Verbesserung der thermischen Leitfähigkeit eingesetzt wird. Graphit scheidet jedoch aus folgenden Gründen als Festschmierstoff für die Erfindung aus.

Im Gegensatz zur weit verbreiteten Meinung, ist die Schmierwirkung im Fall von Graphit keine intrinsische Eigenschaft, sondern auf die Gegenwart von Dämpfen oder kleinen Molekülen wie z.B. Wasser angewiesen. Im Vakuum oder in trockener Umgebung verliert der Graphit seine Schmierwirkung. Bei Temperaturen über 160°C in trockener Umgebung verdampft die Feuchtigkeit und die Schmierwirkung von Graphit sinkt. Gerade in der Anwendung für Bremsbeläge sind aber konstante Reibwerte über einen breiten Temperaturbereich sehr wichtig. In der Kontaktzone zwischen Bremsbelag und Bremsscheibe werden kurzfristig auch Temperaturen über 800°C erreicht. Aus diesem Grund können nur Festschmierstoffe, die sich von Graphit unterscheiden, im Rahmen der Erfindung zur Schaffung einer Faser zur Verbesserung von tribologischen Eigenschaften eingesetzt werden. Entscheidend für die Erfindung ist die Verwendung von Festschmierstoffen, ausgenommen Graphit, zur Verbesserung der tribologischen Eigenschaften.

Die erfindungsgemäße sulfidierte Faser kann in zwei unterschiedlichen Varianten hergestellt werden, nämlich durch die Oberflächenbehandlung von Fasern, chemische oder physikalische Aufbringung von Festschmierstoffen auf die Oberfläche von Fasern, mit oder ohne Bindemittel, und durch die Herstellung von Fasern, welche zumindest einen Festschmierstoff enthalten. Es hat sich gezeigt, dass Mineralfasern für die erfindungsgemäße Anwendung nicht geeignet sind, weshalb sie vom Schutz ausgenommen sind.

Als Faser kommen daher - mit Ausnahme von Mineralfasern - z.B. Zellulosefaser, Aramidfaser, Kunststofffaser, Metallfaser, Glasfasern, Nanofasern, Kohlenstofffaser zur Anwendung. Die Verfahren zur direkten Herstellung von Fasern aus Festschmierstoffen umfassen in weiterer Ausbildung der Erfindung Lasersintern, Schmelzextraktion, spanabhebende Faserherstellung, Formwalzen, sowie Spinnverfahren und andere.

Die erfindungsgemäße Faser kann je nach Anwendungsbereich in ihrer Länge oder in ihrem Durchmesser ohne Einschränkung variieren.

Der Festschmierstoff, aus welchem die erfindungsgemäße Faser gebildet ist oder mit dem sie beschichtet ist, kann gemäß einer weiteren Ausführungsform aus zumindest einem Metallsulfid gebildet sein.

Um einen wirksamen tribologischen Effekt durch die Faser erzielen zu können, hat sich herausgestellt, dass gemäß einer weiteren Ausbildung der Erfindung der Anteil des zumindest einen Festschmierstoffes zumindest 3 Gew.%, besser zumindest 4 Gew.%, insbesondere zumindest 5 Gew.% und bevorzugt zumindest 10 Gew.% beträgt.

Gemäß der Erfindung ist die Faser sulfidiert, sodass an der Oberfläche der Faser z.B. ein Metallsulfid ausgebildet ist, das als Festschmierstoff wirkt.

Ein weiteres erfindungsgemäßes Ausführungsbeispiel kann darin bestehen, dass die Faser eine Eisensulfidfaser oder eine Zinn-Eisensulfidfaser ist.

In weiterer Fortbildung der Erfindung kann der Festschmierstoff zur Herstellung der erfindungsgemäßen Faser als mehrphasiges Metallsulfid vorliegen.

Der Festschmierstoff kann zur Herstellung der erfindungsgemäßen Faser gemäß einer weiteren Ausführungsform der Erfindung aus SnS, SnS₂, MoS₂, Bi₂S₃, ZnS, WS₂, CuFeS₂, FeS, CuS, Cu₂S, MnS, Sb₂S₃, TiS₂, Sulfiden von Cr/Co/Ni, Sn₂S₃, MoS₃, WS₃, Fe₁₋ₓS, MnS₂, Sb₂S₅, ZrS₂, CaS, MgS, Sulfiden von La, Ce und mehrphasigen Sulfiden aus verschiedenen Metallen, BN, PTFE, Phosphaten, Oxiden oder Mischungen davon gebildet sein.

Eine der bevorzugten Anwendungen, für die erfindungsgemäßen Fasern ist die Reibbelagsindustrie, genauer die Verwendung in den verschiedenen Reibbelagstypen: Scheiben- und Trommelbremsbeläge, Kupplungsbeläge sowie sonstige Bremsbeläge, etwa Industriebeläge aber auch solche für Bremsen von Windkraftanlagen die sowohl kunstharzgebunden also auch gesintert oder sonst wie gebunden sein können. Der Anwendungsbereich der Erfindung umfasst alle Formulierungstypen wie Low-Met, NAO, Sinter, Semi-Met, Hybrid und sonstige.

Alle weiteren Anwendungen, in denen Fasern verwendet werden, und in denen neben der Struktur auch die Tribologie eine Rolle spielt sind im Rahmen der Erfindung möglich. Eines der Anwendungsgebiete ist z.B. die Kunststoffindustrie insbesondere die Tribokunststoffe. Entsprechend können diese die erfindungsgemäße Faser enthalten.

Weiters betrifft die Erfindung eine Reibbelagmischung, welche eine erfindungsgemäße sulfidierte Faser umfasst.

Die erfindungsgemäße Reibbelagmischung kombiniert die anwendungstechnischen Vorteile von Festschmierstoffen, z.B. Metallsulfide, und Fasern. Für den Ersatz von Kupfer in Bremsbelägen - zum Beispiel - ist es unerlässlich verschiedene Vorteile zu kombinieren, um die Eigenschaften von Kupfer in der Anwendung im Reibbelag nachzustellen. Durch den Einsatz von Verbundfestschmierstoffen, in diesem Fall strukturgebende und gleichzeitig schmierende Fasern, wird eine nachhaltige Verbesserung der tribologischen Eigenschaften erreicht. Entsprechend der "Kontakt-Plateau-Theorie" bietet eine erfindungsgemäße Festschmierstoff-Faser bzw. ein erfindungsgemäßer faserförmiger Festschmierstoff sehr gute Charakteristiken, um Reibbeläge in allen Belangen zu verbessern. Weiters kann vorgesehen sein, dass der Füllstoff der erfindungsgemäßen Reibbelagmischung aus einem oder mehreren aus Bariumsulfat, Calciumcarbonat, Calciumhydroxid, Calciumfluorid, Eisenoxid, Siliciumdioxid, Vermiculit, Magnesiumoxid, Talk, Zirkoniumsilikat, Zirkoniumoxid, Glimmer, Metallpulver, Molybdänoxid, Aluminiumoxid, andere Metalloxide, Siliciumcarbid, Wollastonit, Kaliumtitanat, Chromit, Calciumsulfat-Whiskers, Petrolkoks, Gummimehl, Nitrilkautschuk, Acrylkautschuk, Friction Dust gebildet ist.

Weiters betrifft die Erfindung einen Brems- oder Kupplungsbelag, bestehend aus einer gebundenen Reibbelagmischung gemäß der Erfindung.

### BEISPIELE:

Beispielhaft sind hier die anwendungstechnischen Ergebnisse von einigen sulfidierten Fasern im Vergleich zu den jeweils gleichartigen aber nicht sulfidierten Fasern (Blank) in Bremsbelägen gezeigt.

Die sulfidierten Fasern wurden in eine gängige Low-Met Formulierung eingebracht und Bremsbeläge wurden verpresst. Die anwendungstechnischen Eigenschaften der Beläge wurden mittels AK-Master Test entsprechend der SAE J2522 am Dynamometer getestet. Die verwendete Schwungmasse ist den nachfolgend dargestellten Ergebnissen zu entnehmen. Das verwendete Bremssystem ist Typ Golf I.

**Tabelle 1: Ergebnisse der AK-Mastertests in kupferhältiger Low-Met Formulierung. Bremssystem Golf 1, Schwungmasse:60 kg m²**

| Ergebnisse (Cu-hältige Formulierung, Schwungmasse: 60 kg m²) | Verschleiß Belag [g] | Verbesserung [%] | Durchschnitts Reibwert µ | Verbesserung [%] | Fade 2 Reibwert 100->5km/h | Verbesserung [%] |
|---|---|---|---|---|---|---|
| Blank | 13,3 | | 0,33 | | 0,24 | |
| Sulfidierte Stahlfaser Versuch 1 | 10,6 | 20 | 0,33 | 0 | 0,28 | 17 |
| Sulfidierte Stahlfaser Versuch 2 | 12,2 | 8 | 0,34 | 3 | 0,30 | 25 |
| Sulfidierte Stahlfaser Versuch 3 | 8,4 | 37 | 0,35 | 6 | 0,27 | 13 |
| Sulfidierte Stahlfaser Versuch 4 | 8,3 | 38 | 0,36 | 9 | 0,29 | 21 |
| | | | | | | |
| Blank | 14,9 | | 0,32 | | 0,28 | |
| Sulfidierte Edelstahlfaser Versuch 1 | 11,5 | 23 | 0,33 | 3 | 0,30 | 7 |
| Sulfidierte Edelstahlfaser Versuch 2 | 12,1 | 19 | 0,33 | 3 | 0,28 | 0 |
| | | | | | | |
| Blank | 13,3 | | 0,33 | | 0,24 | |
| Sulfidierte Steinwolle Versuch 1 | 11,6 | 13 | 0,33 | 0 | 0,28 | 17 |
| Sulfidierte Steinwolle Versuch 2 | 9,0 | 32 | 0,34 | 3 | 0,28 | 17 |
| | | | | | | |
| Blank | 17,4 | | 0,33 | | 0,21 | |
| Sulfidierte Glasfaser Versuch 1 | 8,8 | 49 | 0,35 | 6 | 0,30 | 43 |
| Sulfidierte Glasfaser Versuch 2 | 13,2 | 24 | 0,33 | 0 | 0,30 | 43 |
| | | | | | | |
| Blank | 13,3 | | 0,33 | | 0,24 | |
| Sulfidierte Aramidfaser Versuch 1 | 11,7 | 12 | 0,36 | 9 | 0,28 | 17 |
| Sulfidierte Aramidfaser Versuch 2 | 13,1 | 2 | 0,34 | 3 | 0,31 | 29 |

In Tabelle 1 sind die Verbesserungen in den Bereichen Belagsverschleiß und Durchschnittsreibwert, sowie beim minimalen Reibwert aus dem AK-Master-Block "Fade 2" dargestellt. Über die beispielhafte Versuchsreihe können Verbesserungen im Belagsverschleiß um bis zu 49% im Vergleich zum jeweiligen Blank erzielt werden, für den Durchschnittsreibwert lt. AK-Master Test kann eine Verbesserung um bis zu 9% erzielt werden und für den Mindestreibwert eine Verbesserung um bis zu 43%.

Die Tests wurden in einer kupferfreien Grundmischung wiederholt. In dieser Formulierung können Verbesserungen beim Belagsverschleiß von bis zu 29%, beim Reibwert eine Erhöhung um bis zu 13% und beim Fading 2 eine Verbesserung um bis zu 43% erzielt werden.

Die Ergebnisse sind in der nachfolgenden Tabelle dargestellt.

**Tabelle 2: Ergebnisse der AK-Mastertests in kupferfreier Low-Met Formulierung. Bremssystem Golf 1, Schwungmasse: 40,6 kg m²**

| Ergebnisse (Cu-freie Formulierung, Schwungmasse: 40,6 kg m²) | Verschleiß Belag [g] | Verbesserung [%] | Durchschnitts Reibwert µ | Verbesserung [%] | Fade 2 Reibwert 100->5km/h | Verbesserung [%] |
|---|---|---|---|---|---|---|
| Blank | 7,0 | | 0,31 | | 0,24 | |
| Sulfidierte Stahlfaser Versuch 1 | 6,5 | 7 | 0,32 | 3 | 0,28 | 17 |
| Sulfidierte Stahlfaser Versuch 2 | 6,2 | 11 | 0,33 | 6 | 0,30 | 25 |
| Sulfidierte Stahlfaser Versuch 3 | 6,5 | 7 | 0,33 | 6 | 0,25 | 4 |
| Sulfidierte Stahlfaser Versuch 4 | 6,3 | 10 | 0,34 | 10 | 0,24 | 0 |
| | | | | | | |
| Blank | 6,9 | | 0,32 | | 0,28 | |
| Sulfidierte Edelstahlfaser Versuch 1 | 6,4 | 7 | 0,33 | 3 | 0,30 | 7 |
| Sulfidierte Edelstahlfaser Versuch 2 | 6,3 | 9 | 0,33 | 3 | 0,28 | 0 |
| | | | | | | |
| Blank | 7,0 | | 0,31 | | 0,24 | |
| Sulfidierte Steinwolle Versuch 1 | 5,7 | 19 | 0,32 | 3 | 0,28 | 17 |
| Sulfidierte Steinwolle Versuch 2 | 5,9 | 16 | 0,31 | 0 | 0,28 | 17 |
| | | | | | | |
| Blank | 6,6 | | 0,33 | | 0,21 | |
| Sulfidierte Glasfaser Versuch 1 | 4,7 | 29 | 0,35 | 6 | 0,30 | 43 |
| Sulfidierte Glasfaser Versuch 2 | 5,7 | 14 | 0,33 | 0 | 0,30 | 43 |
| Blank | 7,0 | | 0,31 | | 0,24 | |
| Sulfidierte Aramidfaser Versuch 1 | 5,9 | 16 | 0,35 | 13 | 0,28 | 17 |
| Sulfidierte Aramidfaser Versuch 2 | 5,5 | 21 | 0,34 | 10 | 0,31 | 29 |

Die Reibbelags-Formulierungen zur Erprobung der Vorteile der funktionellen Faser sind nachfolgend dargestellt. Beim anwendungstechnischen Vergleich wurden jeweils Stahlfasern bzw. Edelstahlfasern bzw. Steinwolle oder Aramidfaser durch die jeweilige sulfidierte Type ersetzt.
Formulierung kupferhältig [Gew.%]
Binder 6
Organische Füllstoffe 7
Aramidfaser 3
Steinwolle 7
Stahlfasern / Edelstahlfasern 11
Kupfer / Messing 16
Anorganische Füllstoffe 27
Abrasivstoffe 10
Graphit / Koks 13
Formulierung kupferfrei [Gew.%]
Binder 6
Organische Füllstoffe 8
Aramidfaser 4
Steinwolle 8
Stahlfasern/ Edelstahlfasern 13
Anorganische Füllstoffe 32
Abrasivstoffe 12
Graphit / Koks 17

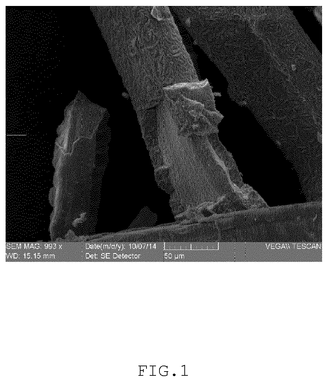

- Fig.1 zeigt ein Beispiel einer sulfidierten Stahlfaser.
- Die verwendeten Stahlfasern haben folgende Charakteristik: Faserlänge: Min: 100µm; Max: 2000µm; Durchschnitt: 900µm Faserdurchmesser: Min: 20µm; Max: 100µm; Durchschnitt: 50µm
- Konzentrationen der Sulfide in den sulfidierten Stahlfasern:

| Bezeichnung | SnS [wt%] | FeS [wt%] | MoS₂ [wt%] |
|---|---|---|---|
| Stahlfaser Versuch 1 | 7 | 35 | - |
| Stahlfaser Versuch 2 | 10 | 10 | - |
| Stahlfaser Versuch 3 | - | 35 | 7 |
| Stahlfaser Versuch 4 | - | 10 | 10 |
| Edelstahlfaser Versuch 1 | 7 | 35 | - |
| Edelstahlfaser Versuch 2 | 10 | 10 | - |

- Zusammenfassung einiger möglicher Materialien für die Reibbelagsrezeptur (Zusammenfassung der einzelnen Gruppen):
Beispiele für Binder: duroplastisches Polymer, üblicherweise Phenolharz oder Melaminharz, Epoxidharz, modifizierte Phenolharze, synthetischer Kautschuk
Beispiele für Füllstoffe: Bariumsulfat, Calciumcarbonat, Calciumhydroxid, Calciumfluorid, Eisenoxid, Siliciumdioxid, Vermiculit, Magnesiumoxid, Talk, Zirkoniumsilikat, Zirkoniumoxid, Glimmer, Metallpulver, Molybdänoxid, Aluminiumoxid, andere Metalloxide, Siliciumcarbid, Wollastonit, Kaliumtitanat, Chromit, Calciumsulfat-Whiskers, Petrolkoks, Gummimehl, Nitrilkautschuk, Acrylkautschuk, Friction Dust

- Beispielhafte Verwendung von Reibbelägen:
Reibbeläge, z.B. Scheibenbremsbeläge, dienen dazu bewegte Gegenstände, z.B. Fahrzeuge (PKW) zu bremsen. Dabei wird ein Reibbelag möglichst flächig auf einen bewegten Gegenkörper, z.B. Bremsscheibe, gedrückt und über die entstehende Reibung wird der Gegenkörper im Verhältnis zum Reibbelag verlangsamt/gebremst.

Dabei entstehen üblicherweise Abrieb (Verschleiß) und Reibungswärme.

Weitere Beispiele von Fasern im Sinne der Erfindung sind im Folgenden skizziert:
- Konzentrationen der Festschmierstoffe an der Oberfläche der beschichteten Stahlfasern:

| Bezeichnung | SnS [wt%] | FeS [wt%] | CaF₂ [wt%] |
|---|---|---|---|
| Stahlfaser Versuch 5 | 5 | 30 | 7 |
| Stahlfaser Versuch 6 | 10 | 10 | 10 |
| Edelstahlfaser Versuch 3 | 5 | 30 | 7 |
| Edelstahlfaser Versuch 4 | 10 | 10 | 10 |

- Zusammensetzung der Sulfide in den umfassenden Metallsulfid Fasern:

| Bezeichnung | CuS [wt%] | SnS [wt%] | FeS [wt%] | MoS₂ [wt%] |
|---|---|---|---|---|
| Vollfaser 1 | - | 20 | 80 | - |
| Vollfaser 2 | 6, 5 | 13,5 | 80 | - |
| Vollfaser 3 | - | 13,5 | 80 | 6, 5 |

- Festschmierstofffasern:
direkte Herstellung z.B. durch Schmelzspinnverfahren (Melt Spinning), für Festschmierstoffe, z.B. Metallsulfide oder mehrphasige Metallsulfide aus einer eigens dafür hergestellten Schmelze. Beispiel dafür ist eine Faser aus SnS. Verwendet wird im Reibbelag der gesamte Faseranteil bzw. eine Fraktion der hergestellten Faser.

Bei der Umsetzung hat sich gezeigt, dass der Festschmierstoff an die Faser gebunden, bzw. die Faser umfassend, anders verteilt im Reibbelag vorkommt, also, dass er an der Stelle platziert werden kann, wo er benötigt wird und den tribologischen Kontakt unterstützt und die Vorteile der Verschleißminimierung und Reibwertstabilisierung ideal unterstützt. Weiters kann sich der Festschmierstoff, an die Faser gebunden, innerhalb der Reibbelagsmischung, vor dem Pressen, nach der Vormischung, nicht mehr sedimentieren und bleibt somit auch im fertigen Verbund homogen verteilt.

Es hat sich gezeigt, dass aus der Erfindung auch ein ökologischer Vorteil entsteht, nämlich die Reduzierung von Buntmetallen, allen voran Kupfer, in Reibbelägen, welche sonst durch den entstehenden Verschleiß in die Umwelt gelangen und ihre ökotoxische Wirkung entfalten können.

## Patentansprüche

1. Faser für tribologische Anwendungen, welche zumindest einen Festschmierstoff umfasst oder mit zumindest einem Festschmierstoff oberflächenbehandelt ist, wobei die Faser eine Metallfaser, Keramikfaser, Naturfaser, Polymerfaser, Zellulosefaser, Aramidfaser, Kunststofffaser, Glasfaser, Nanofaser oder Kohlenstofffaser ist,
und wobei der Festschmierstoff ausgewählt ist aus der Gruppe bestehend aus SnS, SnS2, Bi2S3, ZnS, WS2, CuFeS2, CuS, Cu2S, MnS, Sb2S3, TiS2, Sulfiden von Cr/Co/Ni, Sn2S3, MoS3, WS3, Fe1-xS, MnS2, Sb2S5, ZrS2, CaS, MgS, Sulfiden von La, Ce, mehrphasigen Metallsulfiden aus verschiedenen Metallen, BN, PTFE, Phosphaten, Oxiden, oder Mischungen davon, **dadurch gekennzeichnet, dass** die Faser sulfidiert ist.

2. Faser nach Anspruch 1, **dadurch gekennzeichnet, dass** die sulfidierte Faser eine sulfidierte Stahlfaser oder eine sulfidierte Edelstahlfaser ist.

3. Faser nach Anspruch 1 oder 2, **dadurch gekennzeichnet, dass** die Faser natürlichen Ursprungs ist oder synthetisch hergestellt wird oder durch Recyclierung von natürlichen und/oder synthetischen Produkten gewonnen wird.

4. Faser nach Anspruch 1, 2 oder 3, **dadurch gekennzeichnet, dass** die Faser Metallsulfid umfasst.

5. Faser nach einem der Ansprüche 1 bis 4, **dadurch gekennzeichnet, dass** die einen Festschmierstoff umfassende Faser durch Lasersintern, Schmelzextraktion, spanabhebende Faserherstellung, Formwalzen oder Spinnverfahren hergestellt ist.

6. Faser nach einem der Ansprüche 1 bis 5, **dadurch gekennzeichnet, dass** der Festschmierstoff aus zumindest einem Metallsulfid gebildet ist.

7. Faser nach einem der vorhergehenden Ansprüche, **dadurch gekennzeichnet, dass** der Anteil des zumindest einen Festschmierstoffes zumindest 3 Gew.%, besser mindestens 4 Gew.%, insbesondere zumindest 5 Gew.% und bevorzugt zumindest 10 Gew.% beträgt.

8. Faser nach Anspruch 7, **dadurch gekennzeichnet, dass** das oder die Metallsulfide als mehrphasige Metallsulfide vorliegen.

9. Reibbelagmischung mit zumindest einer Faser nach einem der vorhergehenden Ansprüche 1 bis 8.

10. Reibbelagmischung nach Anspruch 9, **dadurch gekennzeichnet, dass** ein organisches, anorganisches Bindemittel oder kein Bindemittel vorgesehen ist.

11. Reibbelagmischung nach Anspruch 10, **dadurch gekennzeichnet, dass** die Bindung durch thermische und/oder verdichtende Verfahren hergestellt wird.

12. Reibbelagmischung nach Anspruch 9 bis 11 mit einem Füllstoff, **dadurch gekennzeichnet, dass** der Füllstoff aus einem oder mehreren aus Bariumsulfat, Calciumcarbonat, Calciumhydroxid, Calciumfluorid, Eisenoxid, Siliciumdioxid, Vermiculit, Magnesiumoxid, Talk, Zirkoniumsilikat, Zirkoniumoxid, Glimmer, Metallpulver, Molybdänoxid, Aluminiumoxid, andere Metalloxide, Siliciumcarbid, Wollastonit, Kaliumtitanat, Chromit, Calciumsulfat-Whiskers, Petrolkoks, Gummimehl, Nitrilkautschuk, Acrylkautschuk, Friction Dust gebildet ist.

13. Reibbelagmischung nach Anspruch 12, **dadurch gekennzeichnet, dass** die Matrix ein sinterfähiges Stoffgemisch mit dem Hauptbestandteil Kupfer oder Eisen ist.

14. Verwendung einer Faser nach einem der Ansprüche 1 bis 8 zur Herstellung eines Gleit-oder Reibbauteils oder eines Gleit- oder Reibmaschinenelements.

15. Verwendung einer Faser nach einem der Ansprüche 1 bis 8 zur Herstellung eines Brems- oder Kupplungsbelags, bestehend aus einer gebundenen Reibbelagmischung.

16. Verwendung einer Faser nach einem der Ansprüche 1 bis 8 zur Herstellung eines polymeren Bauteils.

17. Verwendung einer Faser nach einem der Ansprüche 1 bis 8 zur Herstellung eines Gleitlacks und sonstiger Beschichtungen.

18. Verwendung einer Faser nach einem der Ansprüche 1 bis 8 zur Herstellung eines Tribokunststoffs, auch in den Formen von Tribovormischung, Tribocompound, Tribomasterbatch.

19. Verwendung einer Faser nach einem der Ansprüche 1 bis 8 zur Herstellung eines Bauteils mit tribologischen Anwendungsgebieten.

## Claims

1. A fiber for tribological applications comprising at least one solid lubricant or being surface-treated with at least one solid lubricant,
said fiber being a metal fiber, a ceramic fiber, a natural fiber, a polymeric fiber, a cellulose fiber, an aramid fiber, a plastic fiber, a glass fiber, a nanofiber, or a carbon fiber, and
the solid lubricant being selected from the group consisting of SnS, SnS2, Bi2S3, ZnS, WS2, CuFeS2, CuS, Cu2S, MnS, Sb2S3, TiS2, sulfides of Cr/Co/Ni, Sn2S3, MoS3, WS3, Fe1-xS, MnS2, Sb2S5, ZrS2, CaS, MgS, sulfides of La, Ce, multi-phased metal sulfides of various metals, BN, PTFE, phosphates, oxides, or mixtures thereof,
**characterised in that** said fiber is sulfidized.

2. The fiber according to claim 1, **characterised in that** said sulfidized fiber is a sulfidized steel fiber or sulfidized stainless steel fiber.

3. The fiber according to claim 1 or 2, **characterised in that** said fiber is one of natural origin, or is synthetically produced, or is obtained through recycling of natural and/or synthetic products.

4. The fiber according to claim 1, 2 or 3, **characterised in that** said fiber comprises metal sulfide.

5. The fiber according to one of claims 1 to 4, **characterised in that** said fiber comprising a solid lubricant is produced by laser sintering, melting extraction, machined fiber production, section rolling or spinning methods.

6. The fiber according to one of claims 1 to 5, **characterised in that** the solid lubricant is formed of at least one metal sulfide.

7. The fiber according to one of the previous claims, **characterised in that** the amount of the at least one solid lubricant is at least 3 % by weight, preferable at least 4 % by weight, in particular at least 5 % by weight and more preferable at least 10 % by weight.

8. The fiber according to claim 7, **characterized in that** the one or more of the metal sulfides are in the form of multi-phased metal sulfides.

9. A friction lining mixture having at least one fiber according to claims 1 to 8.

10. The friction lining mixture according to claim 9, **characterised in that** an organic, inorganic binder, or no binder is provided.

11. The friction lining mixture according to claim 10, **characterised in that** the bond is obtained through thermal and/or compressing methods.

12. The friction lining mixture according to claim 9 to 11 comprising a filler, **characterised in that** the filler is formed of one or more of barium sulfate, calcium carbonate, calcium hydroxide, calcium fluoride, iron oxide, silica, vermiculite, magnesium oxide, talc, zirconium silicate, zirconium oxide, mica, metal powder, molybdenum oxide, alumina, other metal oxides, silicon carbide, wollastonite, potassium titanate, chromite, calcium sulfate-whiskers, pet coke, rubber dust, nitrile rubber, acrylic rubber, friction dust.

13. The friction lining mixture according to claim 12, **characterised in that** the matrix is a sinterable substance mixture having a bulk amount of copper or iron.

14. Use of a fiber according to one of claims 1 to 8, for producing a sliding or frictional component or of a sliding or frictional element.

15. Use of a fiber according to one of claims 1 to 8, for producing a brake or clutch lining consisting of a bonded friction lining mixture.

16. Use of a fiber according to one of claims 1 to 8, for producing a polymeric component.

17. Use of a fiber according to Claim 1, for producing an anti-friction coating and other coatings.

18. Use of a fiber according to one of claims 1 to 8, for producing a triboplastic, even in the form of tribo-premixes, tribocompounds, tribo-masterbatches.

19. Use of a fiber according to one of claims 1 to 8, for producing a component having tribological application areas.

## Revendications

1. Fibre pour applications tribologiques, qui comprend au moins un lubrifiant solide ou qui été traitée en surface avec au moins un lubrifiant solide, la fibre étant une fibre métallique, céramique, naturelle, polymérique, cellulosique, aramide, plastique, optique, nanofibre ou fibre de carbone,
et le lubrifiant solide étant choisi dans le groupe constitué par SnS, SnS2, Bi2S3, ZnS, WS2, CuFeS2, CuS, Cu2S, MnS, Sb2S3, TiS2, des sulfides de Cr/Co/Ni, Sn2S3, MoS3, WS3, Fe1-xS, MnS2, Sb2S5, ZrS2, CaS, MgS, des sulfures de La, Ce, des sulfures métalliques à phase multiple de différents métaux, BN, PTFE, des phosphates, des oxydes ou leurs mélanges, **caractérisée en ce que** la fibre est sulfurée.

2. Fibre selon la revendication 1, **caractérisée en ce que** la fibre sulfurée est une fibre d'acier sulfurée ou une fibre d'acier spécial sulfurée.

3. Fibre selon les revendications 1 ou 2, **caractérisée en ce que** la fibre est d'origine naturelle ou fabriquée de façon synthétique ou obtenue par recyclage de produits naturels et/ou synthétiques.

4. Fibre selon les revendications 1, 2 ou 3, **caractérisée en ce que** la fibre comprend du sulfure métallique.

5. Fibre selon l'une quelconque des revendications 1 à 4, **caractérisée en ce que** la fibre comprenant un lubrifiant solide est fabriquée par frittage au laser, extraction en fusion, production de fibres par enlèvement de copaux, laminage ou des procédés de filature.

6. Fibre selon l'une quelconque des revendications 1 à 5, **caractérisée en ce que** le lubrifiant solide est constitué par au moins un sulfure métallique.

7. Fibre selon l'une quelconque des revendications précédentes, **caractérisée en ce que** la part de l'au moins un lubrifiant solide est d'au moins 3 % en poids, mieux d'au moins 4 % en poids, en particulier d'au moins 5 % en poids et de préférence d'au moins 10 % en poids.

8. Fibre selon la revendication 7, **caractérisée en ce que** le ou les sulfures métalliques sont présents comme sulfures métalliques à phase multiple.

9. Mélange de garniture de friction avec au moins une fibre selon l'une quelconque des revendications précédentes 1 à 8.

10. Mélange de garniture de friction selon la revendication 9, **caractérisé en ce qu'**il est prévu un liant organique, inorganique ou aucun liant.

11. Mélange de garniture de friction selon la revendication 10, **caractérisé en ce que** la liaison est obtenue par des procédés thermiques et/ou de compactage.

12. Mélange de garniture de friction selon les revendications 9 à 11 avec une charge, **caractérisé en ce que** la charge est formée à partir d'un ou plusieurs parmi le sulfate de baryum, le carbonate de calcium, l'hydroxyde de calcium, le fluorure de calcium, l'oxyde ferrique, le dioxyde de silicium, la vermiculite, l'oxyde de magnésium, le talc, le silicate de zirconium, l'oxyde de zirconium, le mica, la poudre métallique, l'oxyde de molybdène, l'oxyde d'aluminium, d'autres oxydes métalliques, le carbure de silicium, la wollastonite, le titanate de potassium, la chromite, des barbes de sulfate de calcium, le coke de pétrole, la poudre de caoutchouc, le caoutchouc nitrile, caoutchouc acrylique, le Friction Dust.

13. Mélange de garniture de friction selon la revendication 12, **caractérisé en ce que** la matrice est un mélange de substances apte à être fritté, contenant comme composant principal le cuivre ou le fer.

14. Utilisation d'une fibre selon l'une quelconque des revendications 1 à 8 pour la fabrication d'un élément coulissant ou frottant ou d'un élément de machine coulissant ou frottant.

15. Utilisation d'une fibre selon l'une quelconque des revendications 1 à 8 pour la fabrication d'une garniture de frein ou d'embrayage, composée d'un mélange lié de garniture de friction.

16. Utilisation d'une fibre selon l'une quelconque des revendications 1 à 8 pour la fabrication d'un élément polymérique.

17. Utilisation d'une fibre selon l'une quelconque des revendications 1 à 8 pour la fabrication d'un vernis de glissement et d'autres revêtements.

18. Utilisation d'une fibre selon l'une quelconque des revendications 1 à 8 pour la fabrication d'un tribo-plastique, également sous forme de tribo-prémélange, tribocompound, tribo-masterbatch.

19. Utilisation d'une fibre selon l'une quelconque des revendications 1 à 8 pour produire un élément destiné à être utilisé dans des domaines tribologiques.
